# EUROPÄISCHE PATENTSCHRIFT

(11) **EP 3 405 358 B1**
(45) Veröffentlichungstag und Bekanntmachung des Hinweises auf die Patenterteilung: **02.09.2020**
(21) Anmeldenummer: 16700979.4
(22) Anmeldetag: 18.01.2016
(51) Int. Cl.: B60J 7/02, B29C 45/14

(54) **ANORDNUNG UND VERFAHREN ZUM HERSTELLEN EINER ANORDNUNG FÜR EIN FAHRZEUGDACH SOWIE EIN SYSTEM FÜR EIN KRAFTFAHRZEUG MIT EINEM FAHRZEUGDACH**
ARRANGEMENT AND METHOD FOR PRODUCING AN ARRANGEMENT FOR A VEHICLE ROOF AND A SYSTEM FOR A MOTOR VEHICLE WITH A VEHICLE ROOF
DISPOSITIF ET PROCÉDÉ DE FABRICATION D'UN DISPOSITIF POUR UN TOIT DE VÉHICULE ET SYSTÈME POUR UN VÉHICULE À MOTEUR COMPORTANT UN TOIT DE VÉHICULE

(43) Veröffentlichungstag der Anmeldung: 28.11.2018
(73) Patentinhaber: Webasto SE, 82131 Stockdorf (DE)
(72) Erfinder: WINGEN, Bernhard, 82131 Stockdorf (DE)
(74) Vertreter: Epping - Hermann - Fischer
(86) Internationale Anmeldenummer: PCT/EP2016/050915
(87) Internationale Veröffentlichungsnummer: WO 2017/125125

(56) Entgegenhaltungen:
- DE-A1- 2 420 264
- DE-A1- 3 637 462
- DE-A1- 4 227 452

## Beschreibung

Die Erfindung betrifft eine Anordnung und ein korrespondierendes Verfahren zum Herstellen einer Anordnung für ein Fahrzeugdach und ein System für ein Kraftfahrzeug mit einem Fahrzeugdach, die eine einfache und kostengünstige Mechanik für das Fahrzeugdach ermöglichen.

Anordnungen für Fahrzeugdächer weisen gegebenenfalls Mechaniken auf, die zum Beispiel ein Öffnen des Fahrzeugdachs oder eines Deckels in dem Fahrzeugdach ermöglichen. Eine solche Anordnung mit einem Deckel für ein Fahrzeugdach ist beispielsweise als Spoilerdach bekannt, welches bei einem Öffnungsvorgang, zum Beispiel mittels eines Ausstellhebels, angehoben und mittels eines Antriebsschlittens in Richtung eines Fahrzeughecks verschoben wird. In seitlichen Bereichen des Deckels sind üblicherweise Führungsmechaniken vorgesehen, um den Deckel in eine Lüfterstellung anzuheben und gegebenenfalls zum weiteren Freigeben der Dachöffnung in Öffnungsrichtung zu verschieben. Die dazu befähigten Führungsmechaniken weisen zum Beispiel Hebellager und/oder Kulissenführungen auf. Eine solche Anordnung, die ein Ausstellen und Verschieben eines Deckels ermöglicht, ist zum Beispiel in dem Dokument DE 10 2011 018 151 A1 beschrieben.

Es ist eine Aufgabe, die der Erfindung zugrunde liegt, eine Anordnung sowie ein korrespondierendes Verfahren zum Herstellen einer Anordnung für ein Fahrzeugdach zu schaffen, die eine einfache und kostengünstige Konstruktion von Mechaniken für das Fahrzeugdach ermöglichen.

Die Aufgabe wird durch die Merkmale der unabhängigen Patentansprüche gelöst.

Ein erfindungsgemäßes Verfahren zum Herstellen einer Anordnung für ein Fahrzeugdach umfasst ein Bereitstellen eines ersten Elements mit einem ersten Ende und einem zweiten Ende, das mittels des ersten Endes mit dem Fahrzeugdach koppelbar ist. Das Verfahren umfasst weiter ein Bereitstellen einer pumpfähigen Substanz mit vorgegebenen Materialeigenschaften und ein Aufbringen der Substanz mittels Spritzguss an einer vorgegebenen Position an dem zweiten Ende des ersten Elements und dadurch Ausbilden eines zweiten Elements, sodass das zweite Element mit dem ersten Element gekoppelt ist und relativ zum ersten Element um eine Drehachse schwenkbar ist. Das erste Element ist als ein Ausstellhebel bereitgestellt, der mittels des ersten Endes mit einem Deckel für das Fahrzeugdach koppelbar ist und der an dem zweiten Ende eine Ausnehmung aufweist. Das zweite Element ist als ein Kunststoffgleiter mit einem Drehelement ausgebildet, dass in der Ausnehmung des Ausstellhebels angeordnet ist.

Mittels eines solchen Verfahrens ist auf kostengünstige und einfache Weise eine Anordnung für ein Fahrzeugdach realisierbar, die lediglich zwei zueinander drehbare Elemente umfasst. Es wird kein zusätzliches separates Drehelement benötigt, um ein zuverlässiges Schwenken des ersten und zweiten Elements relativ zueinander zu ermöglichen. Dadurch, dass das zweite Element mittels Spritzguss ausgebildet ist, ist es nicht erforderlich, zusätzliche Kopplungselemente, wie Bolzen oder Nieten, vorzusehen, um das zweite Element an dem ersten Element anzubringen.

Somit wird mittels des beschriebenen Verfahrens zum Beispiel ein Beitrag für einen einfachen Montageprozess einer platzsparenden Führungs- beziehungsweise Deckelmechanik geleistet, welche ein zuverlässiges und kontrolliertes Bewegen des Fahrzeugdachs und/oder eines Deckels ermöglicht. Beispielsweise sind das erste und zweite Element als Hebel miteinander gekoppelt und realisieren einen Teil einer Hebelmechanik zum Öffnen des Fahrzeugdachs.

Das Fahrzeugdach ist zum Beispiel als ein Cabriodach ausgebildet, an dessen seitlichen Bereichen jeweils ein Paar der beiden beschriebenen Elemente angeordnet ist und ein Öffnen beziehungsweise Falten des Cabriodachs ermöglicht. Darüber können das erste und zweite Element auch Komponenten einer Verdunkelungsvorrichtung oder weiterer Anordnungen für ein Fahrzeugdach realisieren, die zueinander schwenkbare Elemente benötigen.

Mittels des Verfahrens ist eine Anordnung zum Führen eines Deckels für ein Fahrzeugdach realisierbar, die einen besonders einfachen Aufbau aufweist und kostengünstig herstellbar ist. Eine solche Anordnung umfasst den Ausstellhebel und den Kunststoffgleiter als zueinander drehbare Elemente und ermöglicht auch ohne ein separates Drehelement ein zuverlässiges Anheben und Verschieben eines Deckels in einem Fahrzeugdach. Somit ist mittels des beschriebenen Verfahrens auf einfache Weise eine kostengünstige und platzsparende Führungs- beziehungsweise Deckelmechanik realisierbar, welche ein kontrolliertes Bewegen des Deckels ermöglicht.

Beim Ausbilden des Kunststoffgleiters mittels An- oder Umspritzen des zweiten Endes des Ausstellhebels ist gewährleistet, dass dieser nicht dauerhaft an dem Ausstellhebel haftet und eine relative Drehbewegung dieser beiden Komponenten zueinander möglich ist. Der Ausstellhebel ist beispielsweise als Metallhebel realisiert, an dem die bereitgestellte Substanz, aus der der Kunststoffgleiter mittels Spritzguss ausgebildet wird, aufgebracht wird. Die bereitgestellte Substanz weist entsprechend vorgegebene Materialeigenschaften auf, die ein nichthaftendes oder leicht zu lösendes Verhalten der Form des Kunststoffgleiters an dem Ausstellhebel aufweist. Beispielsweise ist der Kunststoffgleiter aus einer Materialkombination aus Polyamid und Kohlefaser gefertigt und weist vorteilhaft hinsichtlich angrenzender Flächen und Kanten zu dem Ausstellhebel eine geringe Reibung auf, sodass in Abstimmung der jeweiligen verwendeten Materialen ein zuverlässiges und effizientes Verschwenken des Ausstellhebels zu dem Kunststoffgleiter realisiert ist.

Im Rahmen der weiteren Beschreibung wird repräsentativ auf Merkmale und Eigenschaften des Ausstellhebels und des Kunststoffgleiters eingegangen. Allerdings sind die Ausführungen entsprechend als Merkmale und Eigenschaften des ersten und zweiten Elements zu verstehen, auch wenn diese beispielsweise zueinander schwenkbare Hebel oder andere Komponenten realisieren, die wie beschrieben ausgebildet sind.

Das Bereitstellen des Ausstellhebels umfasst ein Bereitstellen des Ausstellhebels mit einer Ausnehmung an dem zweiten Ende, sodass durch Aufbringen der bereitgestellten Substanz mittels Spritzguss der Kunststoffgleiter mit dem Drehelement ausgebildet wird, welches in der Ausnehmung angeordnet ist.

Das Verfahren stellt eine Möglichkeit bereit, den Kunststoffgleiter drehbar an dem Ausstellhebel mittels Spritzguss auszubilden. Im Rahmen des Spritzgussprozesses wird die bereitgestellte Substanz an dem zweiten Ende des Ausstellhebels vorgegeben aufgebracht und füllt Hohlräume, wie die Ausnehmung des Ausstellhebels, gezielt aus. Auf diese Weise ist der Kunststoffgleiter teilweise in der Ausnehmung des Ausstellhebels angeordnet und durchdringt diese gegebenenfalls, sofern die Ausnehmung des Ausstellhebels als durchdringende Ausnehmung ausgebildet ist. An dieser Stelle ist dann zum Beispiel die Drehachse definiert, um die der Kunststoffgleiter schwenkbar relativ zum Ausstellhebel ausgebildet ist. Somit kann auf zusätzliche Komponenten und Prozessschritte verzichtet werden, die den Kunststoffgleiter an dem Ausstellhebel befestigen und eine Drehachse definieren. Auf diese Weise kann der Kunststoffgleiter mit dem Drehelement besonders platzsparend ausgebildet werden und insbesondere in Bezug auf eine Höhe zu einem verringerten Bedarf an Bauraum beitragen. Dabei bezieht sich die Höhe auf eine Vertikale eines Kraftfahrzeugs in einem betriebsbereiten Zustand.

Gemäß einer Weiterbildung des Verfahrens umfasst das Bereitstellen des Ausstellhebels ein Bereitstellen des Ausstellhebels mit einer vorgegebenen radialen Geometrie an dem zweiten Ende, sodass durch Aufbringen der bereitgestellten Substanz mittels Spritzguss der Kunststoffgleiter mit einer radialen Geometrie ausgebildet wird.

Der Kunststoffgleiter wird aufgrund des Ausbildens mittels Spritzguss an die Form des zweiten Endes des Ausstellhebels angepasst und weist eine entsprechend komplementäre Form in diesem Bereich auf. Zum Beispiel weist der Ausstellhebel an dem zweiten Ende und damit auch der an dem zweiten Ende ausgebildete Kunststoffgleiter eine vorgegebene radiale Geometrie auf, die ein zuverlässiges Drehen beziehungsweise Schwenken des Kunststoffgleiters relativ zum Ausstellhebel ermöglicht. Eine solche radiale Geometrie ähnelt zum Beispiel einem Drehgelenk, sodass der Ausstellhebel und der Kunststoffgleiter zuverlässig miteinander gekoppelt und zueinander drehbar ausgebildet sind.

Das Ausbilden des Kunststoffgleiters mittels Spritzguss erfolgt zum Beispiel in einem Werkzeug, welches ein Ober- und Unterwerkzeug mit vorgegebenen Ausnehmungen und Kavitäten aufweist. Der bereitgestellte Ausstellhebel wird beispielsweise mit seinem zweiten Ende in einem Bereich zwischen dem Ober- und Unterwerkzeug eingespannt, in dem vorhandene Kavitäten die auszubildende Form des Kunststoffgleiters vorgeben. Mittels Auffüllen dieser Kavitäten mit der bereitgestellten Substanz wird der Kunststoffgleiter an oder um das zweite Ende des Ausstellhebels gezielt ausgebildet.

Gemäß einer Weiterbildung des Verfahrens umfasst das Bereitstellen des Ausstellhebels ein Stanzen und/oder Prägen eines Metallrohlings und dadurch Ausbilden des Ausstellhebels mit dem ersten und zweiten Ende und der Ausnehmung und/oder der vorgegebenen radialen Geometrie.

Diese Weiterbildung des Verfahrens bezieht das Ausbilden des Ausstellhebels mit ein, sodass zum Beispiel vor dem Ausbilden des Kunststoffgleiters der Ausstellhebel mit gewünschter Geometrie ausgestaltet wird. Die vorgegebene Geometrie des Ausstellhebels umfasst gegebenenfalls Kanten, Biegungen, vorspringende Bereiche und/oder Ausnehmungen, die an vorgegebenen Positionen in den bereitgestellten Metallrohling gestanzt, gepresst und/oder geprägt werden. Auf diese Weise können zum Beispiel die zuvor beschriebene radiale Geometrie und/oder Ausnehmung an dem zweiten Ende des Ausstellhebels realisiert werden.

Eine erfindungsgemäße Anordnung für einen Deckel für ein Fahrzeugdach umfasst einen Ausstellhebel mit einem ersten Ende und einem zweiten Ende, der mittels des ersten Endes mit dem Deckel koppelbar ist. Die Anordnung umfasst weiter einen Kunststoffgleiter, der mittels Spritzguss an einer vorgegebenen Position an dem zweiten Ende des Ausstellhebels ausgebildet ist, sodass der Kunststoffgleiter mit dem Ausstellhebel gekoppelt ist und relativ zum Ausstellhebel um eine Drehachse schwenkbar angeordnet ist. Der Ausstellhebel weist an dem zweiten Ende eine Ausnehmung auf und der Kunststoffgleiter ein Drehelement, das mittels Spritzguss ausgebildet und in der Ausnehmung des Ausstellhebels angeordnet ist. Das Drehgelenk realisiert im Wesentlichen die Drehachse, um die der Kunststoffgleiter relativ zum Ausstellhebel schwenken kann, und ist insbesondere als Teil des Kunststoffgleiters einstückig mit diesem ausgebildet.

Die beschriebene Anordnung ist insbesondere mittels eines der zuvor beschriebenen Verfahren herstellbar und ermöglicht auf einfache und kostengünstige Weise eine Konstruktion einer Hebel- beziehungsweise Führungsmechanik für einen Deckel in einem Fahrzeugdach. Sämtliche Merkmale und Eigenschaften der zuvor beschriebenen Verfahren sind somit auch für die Anordnung offenbart und umgekehrt.

Die beschriebene Anordnung weist eine geringe Anzahl an Komponenten auf und ist entsprechend mit einer geringen Anzahl an Produktions- oder Montageschritten realisierbar. Sie kann somit kostengünstig und zeitsparend hergestellt und platzsparend im Bereich eines Fahrzeugdachs integriert werden.

Gemäß einer Weiterbildung der Anordnung weist der Ausstellhebel an dem zweiten Ende eine vorgegebene radiale Geometrie auf, um die der Kunststoffgleiter mittels Spritzguss ausgebildet ist.

Ein erfindungsgemäßes System für ein Kraftfahrzeug mit einem Fahrzeugdach umfasst einen Deckel, der dazu ausgebildet ist, eine Dachöffnung in dem Fahrzeugdach wahlweise freizugeben und zu verschließen, und eine der zuvor beschriebenen Anordnungen. Der Ausstellhebel ist mittels des ersten Endes mit dem Deckel und mittels des zweiten Endes mit dem Kunststoffgleiter gekoppelt. Der Kunststoffgleiter ist wiederum in einer Führungsschiene angeordnet oder mit dieser gekoppelt, um den Deckel zum Freigeben der Dachöffnung in dem Fahrzeugdach aufstellen und zum Verschließen der Dachöffnung in dem Fahrzeugdach einstellen zu können.

Das beschriebene System für ein Kraftfahrzeug mit einem Fahrzeugdach realisiert zum Beispiel ein Dachmodul, welches in dem Fahrzeugdach des Kraftfahrzeugs angeordnet werden kann, um mittels der beschriebenen Mechanik ein zuverlässiges und einfaches Aufrichten, Verschieben und Wiedereinstellen des Deckels zu ermöglichen.

Ausführungsbeispiele der Erfindung sind im Folgenden anhand der schematischen Zeichnungen näher erläutert. Es zeigen:
- Figur 1: ein Fahrzeugdach in einer perspektivischen Ansicht,
- Figur 2A-2B: ein Ausführungsbeispiel eines Ausstellhebels und eines Kunststoffgleiters für einen Deckel,
- Figur 3: ein Ablaufdiagramm für ein Verfahren zum Herstellen einer Anordnung für einen Deckel.

Elemente gleicher Konstruktion oder Funktion sind figurenübergreifend mit den gleichen Bezugszeichen gekennzeichnet.

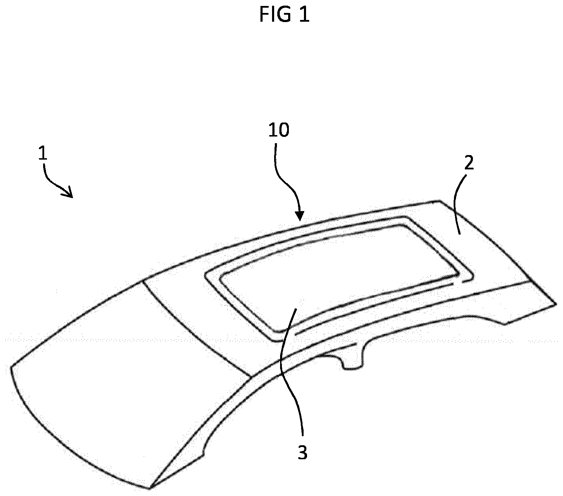

Figur 1 zeigt in einer perspektivischen Ansicht schematisch ein System für ein Kraftfahrzeug 1, das einen Deckel 3 und eine Anordnung 10 umfasst. Der Deckel 3 ist in einem Fahrzeugdach 2 des Kraftfahrzeugs 1 angeordnet und ist beispielsweise relativ zum Fahrzeugdach 2 verschiebbar ausgebildet, um wahlweise eine Dachöffnung in des Fahrzeugdachs 2 freizugeben und zu verschließen.

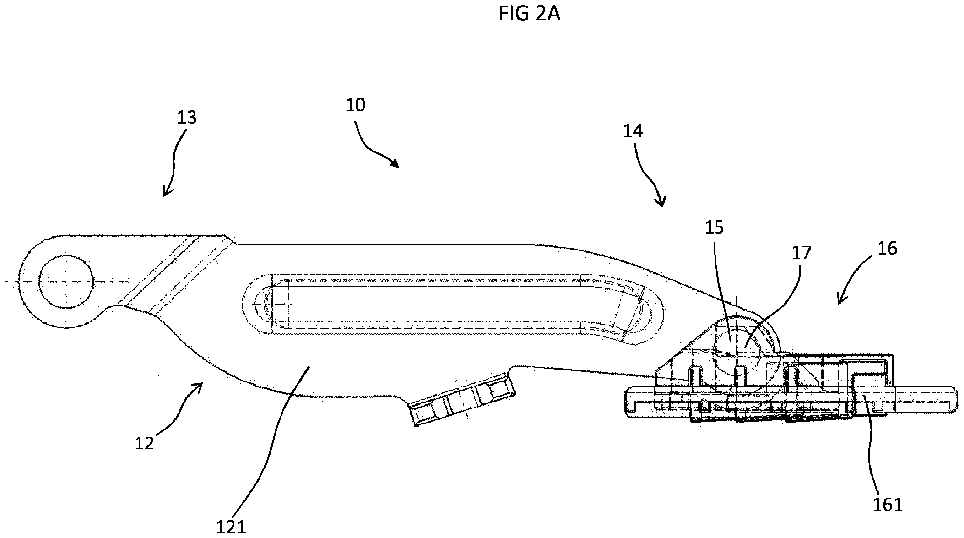

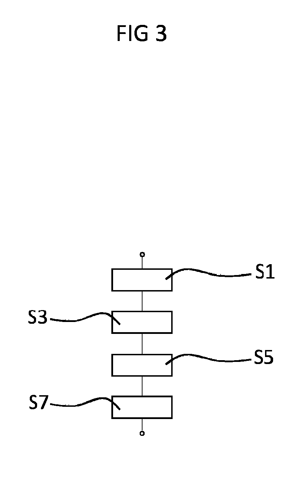

Mittels der Anordnung 10 ist eine einfache und platzsparende Führungsmechanik realisierbar, die kostengünstig herstellbar ist und die ein zuverlässiges Ausstellen, Verschieben und Einstellen des Deckels 3 ermöglicht. Die Anordnung 10 und ein korrespondierendes Verfahren zum Herstellen einer solchen Anordnung 10 werden anhand der nachfolgenden Figuren 2A-2B und Figur 3 näher erläutert.

Figur 2A zeigt in einem Querschnitt ein erstes Element 12 mit einem ersten Ende 13 und einem zweiten Ende 14. An dem zweiten Ende 14 ist ein zweites Element 16 mit dem ersten Element 12 gekoppelt, welches an einer vorgegebenen Position an dem zweiten Ende 14 mittels Spritzguss ausgebildet ist.

In dem dargestellten Ausführungsbeispiel ist das erste Element 12 als ein Ausstellhebel 121 und das zweite Element 16 als ein Kunststoffgleiter 161 ausgebildet. In weiteren Ausgestaltungen der Anordnung 10 sind das erste und zweite Element 12 und 16 beispielsweise als Hebel ausgebildet und mittels Spritzguss miteinander gekoppelt und realisieren einen Teil einer Hebelmechanik zum Öffnen des Fahrzeugdachs 2, welches gegebenenfalls ein Cabriofaltdach realisiert.

Der Kunststoffgleiter 161 ist derart ausgestaltet, das er relativ zum Ausstellhebel 121 um eine Drehachse A schwenkbar ist. Zu diesem Zweck weist der Kunststoffgleiter 161 ein Drehelement 17 auf, das sich durch eine Ausnehmung 15 an dem zweiten Ende 14 des Ausstellhebels 121 erstreckt.

Dadurch, dass der Kunststoffgleiter 161 mittels Spritzguss ausgebildet ist, ist das Drehelement 17 als ein Teil des Kunststoffgleiters 161 einstückig mit diesem hergestellt. Somit werden keine zusätzlichen Kopplungselemente, wie Bolzen oder Nieten, benötigt, um den Kunststoffgleiter 161 an dem Ausstellhebel 121 anzubringen und die Anordnung 10 kann im Rahmen eines Herstellungsverfahrens kostengünstig und zeitsparend hergestellt werden.

Der Ausstellhebel 121 ist mittels des ersten Endes 13 mit dem Deckel 3 koppelbar. Mittels des zweiten Endes 14 und dem daran ausgebildeten Kunststoffgleiter 161 ist der Ausstellhebel 121 zum Beispiel mit einer Führungsschiene gekoppelt, in der der Kunststoffgleiter 161 angeordnet ist. Somit kann auf einfache Weise mit einer besonders geringen Anzahl von Komponenten mittels der Anordnung 10 eine platzsparende Führungsmechanik für den Deckel 3 realisiert werden, um den Deckel 3 zum Freigeben der Dachöffnung in dem Fahrzeugdach 2 aufstellen und zum Verschließen der Dachöffnung in dem Fahrzeugdach 2 einstellen.

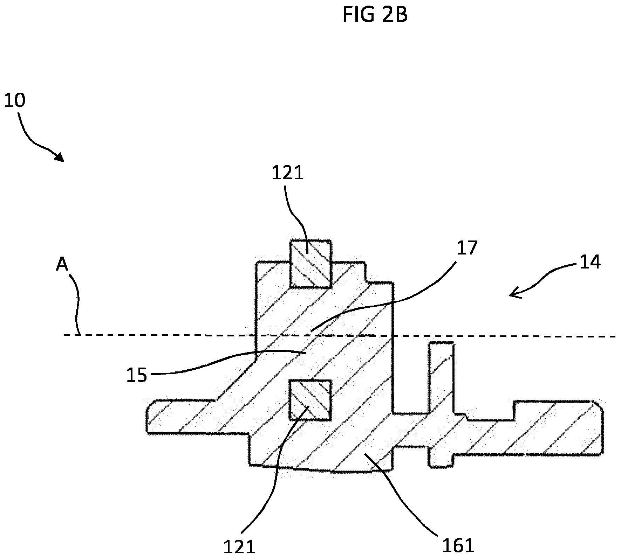

Figur 2B zeigt einen Querschnitt der Anordnung 10 an einer Position des zweiten Endes 14 durch das Drehelement 17 des Kunststoffgleiters 161 und die Ausnehmung 15 des Ausstellhebels 121. Der dargestellte Querschnitt ist im Wesentlichen senkrecht zu dem in Figur 2A illustrierten Querschnitt orientiert. Anhand der Figur 2B ist zu erkennen, dass das Drehelement 17 um die Drehachse A einstückig mit dem Kunststoffgleiter 161 ausgebildet ist. Die weiteren dargestellten Kanten und Formen des Kunststoffgleiters 161 und auch des Ausstellhebels 121 sind als vorgegebene Geometrien im Rahmen eines Herstellungsverfahrens ausgebildet worden. Ein solches Verfahren zum Herstellen der Anordnung 10 wird nachfolgen anhand der Figur 3 näher erläutert.

Figur 3 zeigt ein Ablaufdiagramm für ein Verfahren zum Herstellen der Anordnung 10, bei dem in einem Schritt S1 der Ausstellhebel 121 mit vorgegebener Geometrie bereitgestellt wird. Die Geometrie umfasst insbesondere die Ausnehmung 15 an dem zweiten Ende 14 und gegebenenfalls auch radiale Bereiche, die ein Schwenken des an dem Ausstellhebel 121 auszubildenden Kunststoffgleiters 161 ermöglichen. Gegebenenfalls wird der Ausstellhebel 121 nicht mit vorgegebener Geometrie bereitgestellt, sondern in dem Schritt S1 mittels Stanzens und/oder Prägens eines Metallrohlings ausgebildet. Auf diese Weise können auch Kanten, Biegungen, vorspringende Bereiche und/oder weitere Ausnehmungen an vorgegebenen Positionen des Metallrohlings ausgebildet werden, um den Ausstellhebel 121 für ein zuverlässiges und sicheres Führen des Deckels 3 auszugestalten.

In einem weiteren Schritt S3 wird der Ausstellhebel 121 zum Beispiel gezielt in einem Werkzeug positioniert und eingespannt, welches das Ausbilden des Kunststoffgleiters 161 mittels Spritzguss ermöglicht. Ein solches Werkzeug umfasst beispielsweise ein Ober- und Unterwerkzeug mit vorgegebenen Ausnehmungen und Kavitäten die die auszubildende Form des Kunststoffgleiters 161 bestimmen.

In einem weiteren Schritt S5 werden vorgegebene Kavitäten des Werkzeugs mit einer bereitgestellten Substanz aufgefüllt und dadurch der Kunststoffgleiter 161 an oder um das zweite Ende 14 des Ausstellhebels 121 gezielt ausgebildet. Beim Ausbilden des Kunststoffgleiters 161 wird gewährleistet, dass dieser nicht dauerhaft an dem Ausstellhebel 121 haftet und somit eine relative Drehbewegung dieser beiden Komponenten zueinander möglich ist. Diesbezüglich werden zum Beispiel die Materialien des Ausstellhebels 121 und des Kunststoffgleiters 161 aufeinander abgestimmt.

Der Ausstellhebel 121 ist beispielsweise als Metallhebel realisiert, an dem die bereitgestellte Substanz, aus der der Kunststoffgleiter 161 mittels Spritzguss ausgebildet wird, aufgebracht wird. Die bereitgestellte Substanz weist zum Beispiel Materialeigenschaften auf, die zu einem nichthaftenden oder leicht zu lösendem Verhalten der Form des Kunststoffgleiters 161 an dem Ausstellhebel 121 führen. Beispielsweise ist der Kunststoffgleiter 161 aus einer Materialkombination aus Polyamid und Kohlefaser gefertigt, welche an den metallischen Ausstellhebel 121 angespritzt ist und den Kunststoffgleiter 161 ausbildet. Somit ist der Kunststoffgleiter 161 schwenkbar um die Drehachse A realisiert und an die Form des zweiten Endes 14 des Ausstellhebels 121 angepasst und weist überall dort eine radiale Geometrie komplementär zu der des Ausstellhebels 121 auf, wo eine Drehbewegung zugelassen werden soll.

In einem weiteren Schritt S7 wird die so hergestellte Anordnung 10 dann zum Beispiel mit dem Deckel 3 und einer Führungsschiene gekoppelt, um ein Dachmodul oder System für das Fahrzeugdach 2 des Kraftfahrzeugs 1 zu realisieren.

Mittels des beschriebenen Verfahrens ist auf einfache Weise eine kostengünstige und platzsparende Ausgestaltung der Anordnung 10 zum Führen des Deckels 3 für realisierbar, die im Wesentlichen lediglich zwei zueinander drehbare Komponenten, den Ausstellhebel 121 und den Kunststoffgleiter 161 umfasst, die ein zuverlässiges Anheben, Verschieben und Einstellen des Deckels 3 in dem Fahrzeugdach 2 ermöglichen. Es werden keine zusätzlichen Komponenten oder Prozessschritte benötigt, sodass mittels des beschriebenen Verfahrens ein Beitrag für einen einfachen Montageprozess einer platzsparenden Führungs- beziehungsweise Deckelmechanik geleistet wird.

### Bezugszeichenliste

- 1: Kraftfahrzeug
- 2: Fahrzeugdach
- 3: Deckel
- 10: Anordnung
- 12: erstes Element
- 121: Ausstellhebel
- 13: erstes Ende des Ausstellhebels
- 14: zweites Ende des Ausstellhebels
- 15: Ausnehmung des Ausstellhebels
- 16: zweites Element
- 161: Kunststoffgleiter
- 17: Drehelement des Kunststoffgleiters

- A: Drehachse

## Patentansprüche

1. Verfahren zum Herstellen einer Anordnung (10) für ein Fahrzeugdach (2), umfassend
- Bereitstellen eines ersten Elements (12) als einen Ausstellhebel (121) mit einem ersten Ende (13), einem zweiten Ende (14) und einer Ausnehmung (15) an dem zweiten Ende (14), wobei der Ausstellhebel (121) mittels des ersten Endes (13) mit einem Deckel für das Fahrzeugdach (2) koppelbar ist,
- Bereitstellen einer pumpfähigen Substanz mit vorgegebenen Materialeigenschaften, und
- Aufbringen der bereitgestellten Substanz mittels Spritzguss an einer vorgegebenen Position an dem zweiten Ende (14) des Ausstellhebels (121) und dadurch Ausbilden eines zweiten Elements (16) als einen Kunststoffgleiter (161) mit einem Drehelement (17), welches in der Ausnehmung (15) angeordnet ist, sodass der Kunststoffgleiter (161) mit dem Ausstellhebel (121) gekoppelt ist und relativ zum Ausstellhebel (121) um eine Drehachse (A) schwenkbar ist.

2. Verfahren nach Anspruch 1, wobei das Bereitstellen des ersten Elements (12) umfasst:
Bereitstellen des ersten Elements (12) mit einer vorgegebenen radialen Geometrie an dem zweiten Ende (14), sodass durch Aufbringen der bereitgestellten Substanz mittels Spritzguss das zweite Element (16) mit einer radialen Geometrie ausgebildet wird.

3. Verfahren nach Anspruch 1 oder 2, wobei das Bereitstellen des ersten Elements (12) umfasst:
Stanzen und/oder Prägen eines Metallrohlings und dadurch Ausbilden des ersten Elements (12) mit dem ersten und zweiten Ende (13, 14) und der Ausnehmung (15) und/oder der vorgegebenen radialen Geometrie.

4. Anordnung (10) für ein Fahrzeugdach (2), umfassend
- ein erstes Element (12) als ein Ausstellhebel (121) mit einem ersten Ende (13), einem zweiten Ende (14) und einer Ausnehmung (15), wobei der Ausstellhebel (121) mittels des ersten Endes (13) mit einem Deckel (5) für das Fahrzeugdach (2) koppelbar ist, und **gekennzeichnet durch**:
- ein zweites Element (16) als ein Kunststoffgleiter (161) mit einem Drehelement (17), der mittels Spritzguss an einer vorgegebenen Position an dem zweiten Ende (14) des Ausstellhebels (121) mit vorgegebener Geometrie ausgebildet ist, sodass sich das Drehelement (17) des Kunststoffgleiters (161) in die Ausnehmung (15) des Ausstellhebels (121) erstreckt und der Kunststoffgleiter (161) mit dem Ausstellhebel (121) gekoppelt ist und relativ zum Ausstellhebel (121) um eine Drehachse (A) schwenkbar angeordnet ist.

5. Anordnung (10) nach Anspruch 4, wobei das erste Element (12) an dem zweiten Ende (14) eine vorgegebene radiale Geometrie aufweist, um die das zweite Element (16) mittels Spritzguss ausgebildet ist.

6. Anordnung (10) nach Anspruch 4 oder 5, wobei das erste Element (12) an dem zweiten Ende (14) eine Ausnehmung (15) aufweist und das zweite Element (16) ein Drehelement (17) aufweist, das mittels Spritzguss ausgebildet und in der Ausnehmung (15) des ersten Elements (12) angeordnet ist.

7. System für ein Kraftfahrzeug (1) mit einem Fahrzeugdach (2), umfassend
- einen Deckel (3), der dazu ausgebildet ist, eine Dachöffnung in dem Fahrzeugdach (2) wahlweise freizugeben und zu verschließen, und
- eine Anordnung (10) nach einem der Ansprüche 4 bis 6, wobei der Deckel (3) mit dem Ausstellhebel (121) und der Kunststoffgleiter (161) mit einer Führungsschiene gekoppelt sind, um den Deckel (3) zum Freigeben der Dachöffnung in dem Fahrzeugdach (2) aufzustellen und zum Verschließen der Dachöffnung in dem Fahrzeugdach (2) einzustellen.

## Claims

1. Method for producing an arrangement (10) for a vehicle roof (2), comprising:
- providing a first element (12) as a raising lever (121) with a first end (13), a second end (14) and a recess (15) at the second end (14), wherein the raising lever (121) is couplable by means of the first end (13) to a cover for the vehicle roof (2),
- providing a pumpable substance with predetermined material properties, and
- applying the provided substance by means of injection moulding at a predetermined position at the second end (14) of the raising lever (121) and thereby forming a second element (16) as a plastic slider (161) with a rotary element (17), which is arranged in the recess (15), such the plastic slider (161) is coupled to the raising lever (121) and is pivotable relative to the raising lever (121) about an axis of rotation (A).

2. Method according to Claim 1, wherein the providing of the first element (12) comprises:
providing the first element (12) with a predetermined radial geometry at the second end (14) such that, by applying the provided substance by means of injection moulding, the second end (16) is formed with a radial geometry.

3. Method according to Claim 1 or 2, wherein the providing of the first element (12) comprises:
punching and/or stamping a metal blank and thereby forming the first element (12) with the first and second end (13, 14) and the recess (15) and/or the predetermined radial geometry.

4. Arrangement (10) for a vehicle roof (2), comprising
- a first element (12) as a raising lever (121) with a first end (13), a second end (14) and a recess (15), wherein the raising lever (121) is couplable by means of the first end (13) to a cover (5) for the vehicle roof (2), and **characterized by**:
- a second element (16) as a plastic slider (161) with a rotary element (17), which plastic slider is formed by means of injection moulding at a predetermined position at the second end (14) of the raising lever (121) with a predetermined geometry such that the rotary element (17) of the plastic slider (161) extends into the recess (15) of the raising lever (121), and the plastic slider (161) is coupled to the raising lever (121) and is arranged pivotably relative to the raising lever (121) about an axis of rotation (A).

5. Arrangement (10) according to Claim 4, wherein
the first element (12) has, at the second end (14), a predetermined radial geometry about which the second end (16) is formed by means of injection moulding.

6. Arrangement (10) according to Claim 4 or 5, wherein the first element (12) has a recess (15) at the second end (14), and the second element (16) has a rotary element (17) which is formed by means of injection moulding and is arranged in the recess (15) of the first element (12).

7. System for a motor vehicle (1) with a vehicle roof (2), comprising
- a cover (3) which is designed to optionally open up and to close a roof opening in the vehicle roof (2), and
- an arrangement (10) according to one of Claims 4 to 6, wherein the cover (3) is coupled to the raising lever (121) and the plastic slider (161) is coupled to a guide rail, in order to raise the cover (3) in order to open up the roof opening in the vehicle roof (2) and to adjust same for closing the roof opening in the vehicle roof (2).

## Revendications

1. Procédé de fabrication d'un ensemble (10) destiné à un toit de véhicule (2), le procédé comprenant les étapes suivantes :
- fournir un premier élément (12) en tant que levier de déploiement (121) qui est pourvu d'une première extrémité (13), d'une deuxième extrémité (14) et d'un évidement (15) ménagé à la deuxième extrémité (14), le levier de déploiement (121) pouvant être accouplé à un plafond, destiné au toit de véhicule (2), au moyen de la première extrémité (13),
- fournir une substance pouvant être pompée et présentant des propriétés de matière prédéterminées, et
- appliquer la substance fournie par moulage par injection à une position prédéterminée à sur la deuxième extrémité (14) du levier de déploiement (121) et former ainsi un deuxième élément (16) en tant que curseur en matière synthétique (161) pourvu d'un élément rotatif (17) qui est disposé dans l'évidement (15) de manière à ce que le curseur en plastique (161) soit accouplé au levier de déploiement (121) et puisse pivoter sur un axe de rotation (A) par rapport au levier de déploiement (121).

2. Procédé selon la revendication 1, l'étape de fourniture du premier élément (12) comprenant :
la fourniture du premier élément (12) à géométrie radiale prédéterminée à la deuxième extrémité (14) de manière à former le deuxième élément (16) à géométrie radiale par application de la substance fournie par moulage par injection.

3. Procédé selon la revendication 1 ou 2, l'étape de fourniture du premier élément (12) comprenant :
le matriçage et/ou l'estampage d'un flan métallique et la formation subséquente du premier élément (12) pourvu des première et deuxième extrémités (13, 14) et de l'évidement (15) et/ou la géométrie radiale prédéterminée.

4. Ensemble (10) destiné à un toit de véhicule (2), l'ensemble comprenant
- un premier élément (12) en tant que levier de déploiement (121) pourvu d'une première extrémité (13), d'une deuxième extrémité (14) et d'un évidement (15), le levier de déploiement (121) pouvant être accouplé à un plafond (5) destiné au toit de véhicule (2) au moyen de la première extrémité (13), et **caractérisé par** :
- un deuxième élément (16) en tant que curseur en matière synthétique (161) pourvu d'un élément rotatif (17) qui est formé avec une géométrie prédéterminée par moulage par injection à une position prédéterminée à la deuxième extrémité (14) du levier de déploiement (121) de manière à ce que l'élément rotatif (17) du curseur en matière synthétique (161) s'étende jusque dans l'évidement (15) du levier de déploiement (121) et le curseur en matière synthétique (161) est accouplé au levier de déploiement (121) et est disposé de manière à pouvoir pivoter sur un axe de rotation (A) par rapport au levier de déploiement (121).

5. Ensemble (10) selon la revendication 4, le premier élément (12) ayant à la deuxième extrémité (14) une géométrie radiale prédéterminée autour de laquelle le deuxième élément (16) est formé par moulage par injection.

6. Ensemble (10) selon la revendication 4 ou 5, le premier élément (12) comportant un évidement (15) à la deuxième extrémité (14) et le deuxième élément (16) comportant un élément rotatif (17) qui est formé par moulage par injection et qui est disposé dans l'évidement (15) du premier élément (12).

7. Système destiné à un véhicule automobile (1) pourvu d'un toit de véhicule (2), le système comprenant
- un plafond (3), qui est conçu pour libérer et fermer au choix une ouverture de toit ménagée dans le toit de véhicule (2), et
- un ensemble (10) selon l'une des revendications 4 à 6, le plafond (3) étant accouplé au levier de déploiement (121) et le curseur en matière synthétique (161) étant accouplé à un rail de guidage pour régler le plafond (3) afin de libérer l'ouverture de toit ménagée dans le toit de véhicule (2) et pour fermer l'ouverture de toit ménagée dans le toit de véhicule (2) .
